# EUROPEAN PATENT APPLICATION

(11) **EP 4 616 715 A1**
(43) Date of publication of application: **17.09.2025**
(21) Application number: 23888726.9
(22) Date of filing: 08.11.2023
(51) Int. Cl.: A21C 3/06

(54) **CURLING DEVICE FOR DOUGH PIECE**

(30) Priority: 08.11.2022 JP 2022178914
(71) Applicant: Rheon Automatic Machinery Co., Ltd., Utsunomiya-shi, Tochigi 320-0071 (JP)
(72) Inventor: FUKUGAMI, Taro, Utsunomiya-shi, Tochigi 320-0071 (JP)
(74) Representative: Huebner, Stefan Rolf
(86) International application number: PCT/JP2023/040163
(87) International publication number: WO 2024/101379

(57) **Abstract**

A curling sheet (10a) includes a lower surface facing a conveyor belt (2b). The lower surface includes a first portion (11) having a relatively large gripping force relative to a dough piece (D), and a second portion (12) having a relatively small gripping force relative to the dough piece (D). The lower surface of the curling sheet (10a) is made of the first portion in an upstream area (10e) where the curling operation of the dough piece (D) starts, and the central portion in the width direction (B) is made of the second portion in a downstream area (10f) where the curling operation of the dough piece (D) has been completed.

## Description

### TECHNICAL FIELD

The present invention relates to a device for curling a flat dough piece of a food product.

### BACKGROUND ART

A curling device is known that uses a curling sheet to curl a substantially triangular and flat dough piece conveyed by a lower conveyor (for example, Patent Document 1). The dough piece is for a food product, for example, a dough piece for bread, such as a croissant or a butter roll.

### PRIOR ART PUBLICATION

Patent Document 1: US Patent Application Publication No. 2010/0247729

### SUMMARY OF THE PRESENT INVENTION

### PROBLEM TO BE SOLVED BY THE PRESENT INVENTION

At both ends of the dough piece that has been curled by the curling device and discharged from the curling sheet, a surface of the dough piece may be rubbed and become rough. Such a rough surface may reduce a quality of a final product.

Therefore, an object of the present invention is to provide a curling device that can reduce roughness on the surface of the dough piece at both ends discharging from a curling sheet.

### MEANS FOR SOLVING THE PROBLEM

In order to achieve the above object, a curling device according to the present invention is a curling device for curling a flat dough piece, including a lower conveyor including a conveyor belt for conveying the dough piece, and a curling sheet unit disposed on the conveyor belt, wherein the curling sheet unit includes a curling sheet for curling a dough piece, wherein the curling sheet includes a lower surface facing the conveyor belt, and the lower surface includes a first portion having a relatively large gripping force relative to the dough piece and a second portion having a relatively small gripping force relative to the dough piece, and wherein the lower surface of the curling sheet is made of the first portion in an upstream area where the curling operation of the dough piece starts, and the central portion in the width direction is made of the first portion and the both sides in the width direction is made of the second portion in the downstream area where the curling operation of the dough piece has been completed.

In the above embodiment, preferably, the first portion includes a convex and concave surface, while the second portion includes a smooth surface.

Further, in the above embodiment, preferably, the curling sheet unit includes a resistance portion that enhances the curling operation of the dough piece in the upstream area, and the resistance portion includes a sheet which is different from the curling sheet. The resistance portion may include a rod-like element integrated with the curling sheet.

Furthermore, in the above embodiment, preferably, the curling sheet includes a cutout or an aperture through which a spray passes.

In the above embodiment, preferably, the curling device further includes a weight disposed on the curling sheet and both sides of the curling sheet in the width direction.

### BRIEF DESCRIPTION OF THE DRAWINGS

Fig. 1 is a schematic front view of a curling device according to the present invention.
Fig. 2 is a schematic plan view of the curling device of Fig. 1.
Fig. 3 is a schematic cross-sectional view of the curling device of Fig. 1.
Fig. 4 is a schematic side view showing a curled dough piece.
Fig. 5 is a partially enlarged front view of a first embodiment of a curling sheet unit.
Fig. 6 is a view showing a lower surface of a long sheet of the curling sheet unit of Fig. 5.
Fig. 7 is an enlarged perspective view of a lower surface of the long sheet.
Fig. 8 is a view showing a lower surface of a short sheet of the curling sheet unit of Fig. 5.
Fig. 9 is a side view of the short sheet of Fig. 8.
Fig. 10 is a view showing lower surfaces of a long sheet and a short sheet of the curling sheet unit of Fig. 5.
Fig. 11 is a partially enlarged front view of the second embodiment of a curling sheet unit.
Fig. 12 is a view showing the lower surface of a long sheet of the curling sheet unit of Fig. 11.
Fig. 13 is a view showing the lower surface of a short sheet of the curling sheet unit of Fig. 11.
Fig. 14 is a side view of a short sheet of Fig. 13.
Fig. 15 is a partially enlarged front view of a third embodiment of the curling sheet unit.
Fig. 16 is a view showing the lower surface of the long sheet of the curling sheet unit of Fig. 15.
Fig. 17 is a side view of the long sheet of Fig. 16.

### DESCRIPTION OF EMBODIMENTS

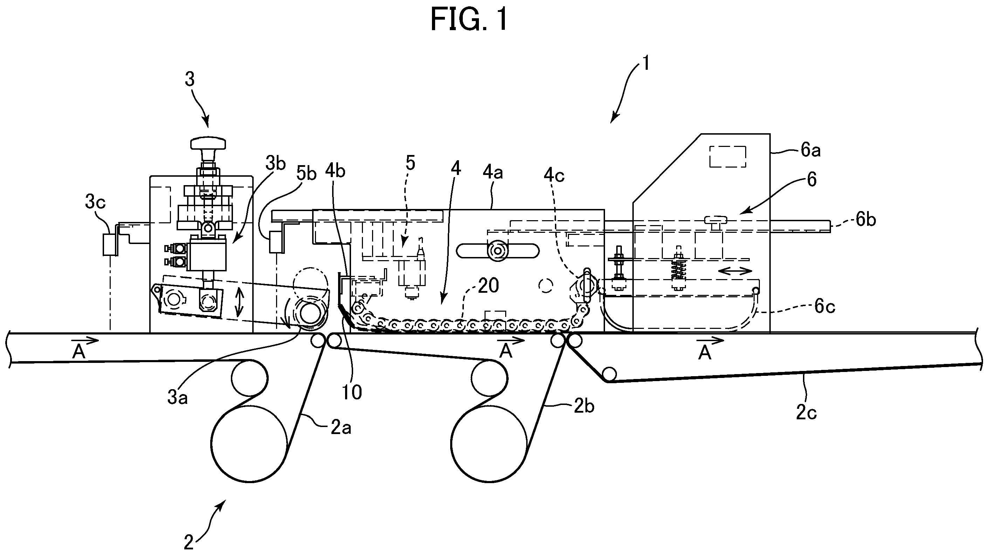

Referring to Figs. 1-4, an embodiment of a curling device according to the present invention will be explained.

A curling device 1 includes a lower conveyor 2 which conveys a dough piece D in a conveying direction A, a press roller device 3, a curling unit 4, a spray device 5, and a curling position adjustment device 6.

The dough piece D has a flat, substantially triangular shape, and its base is aligned with a width direction B perpendicular to the conveying direction A.

The lower conveyor 2 includes a first conveyor belt 2a, a second conveyor belt 2b disposed adjacent to and downstream of the first conveyor belt 2a, and a third conveyor belt 2c disposed adjacent to and downstream of the second conveyor belt 2b. Each of the conveyor belts 2a, 2b, 2c is preferably configured so that the dough piece D being conveyed moves as little as possible relative to a surface of the conveyor belt. Preferably, a speed of the second conveyor belt 2b is faster than those of the first conveyor belt 2a and the third conveyor belt 2c.

The press roller device 3 is disposed above the first conveyor belt 2a. The press roller device 3 includes a press roller 3a disposed above a downstream end of the first conveyor belt 2a, a drive mechanism 3b for raising and lowering the press roller 3a (for example, including an air cylinder), and a sensor 3c for detecting the dough piece D. Preferably, the press roller 3a is configured to be rotated by a separate motor. The press roller device 3 is preferably configured so that after the dough piece D is detected by the sensor 3c and when the dough piece D reaches the press roller 3a, the press roller 3a is lowered based on a moving distance of the first conveyor belt 2a.

The curling unit 4 is disposed above the second conveyor belt 2b. The curling unit 4 includes a frame 4a, an upstream span 4b, a downstream span 4c, a curling sheet unit 10, and a weight 20. The curling sheet unit 10 hangs from the upstream span 4b. A structure of the curling sheet unit 10 will be explained in detail later. The weight 20 hangs from the upstream span 4b and the downstream span 4c.

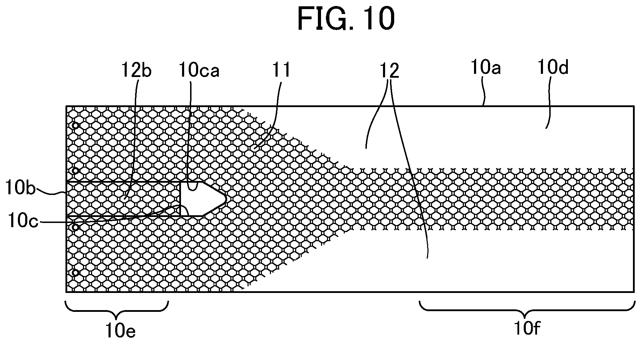

The spray device 5 is disposed above the second conveyor belt 2b. The spray device 5 includes a spray nozzle 5a, and a sensor 5b. The spray device 5 is preferably configured so that after the dough piece D is detected by the sensor 5b and when the dough piece D reaches an aperture 10ca (see Fig. 10) of the curling sheet unit 10, spraying operation is performed through the spray nozzle 5a based on a moving distance of the second conveyor belt 2b.

The curling position adjustment device 6 is disposed above the third conveyor belt 2c. The curling position adjustment device 6 includes a frame 6a, a support section 6b which is supported by the frame 6a and extends in the conveying direction A at a center of the width direction B, and a press section 6c which hangs down from both opposite ends of the support section 6b.

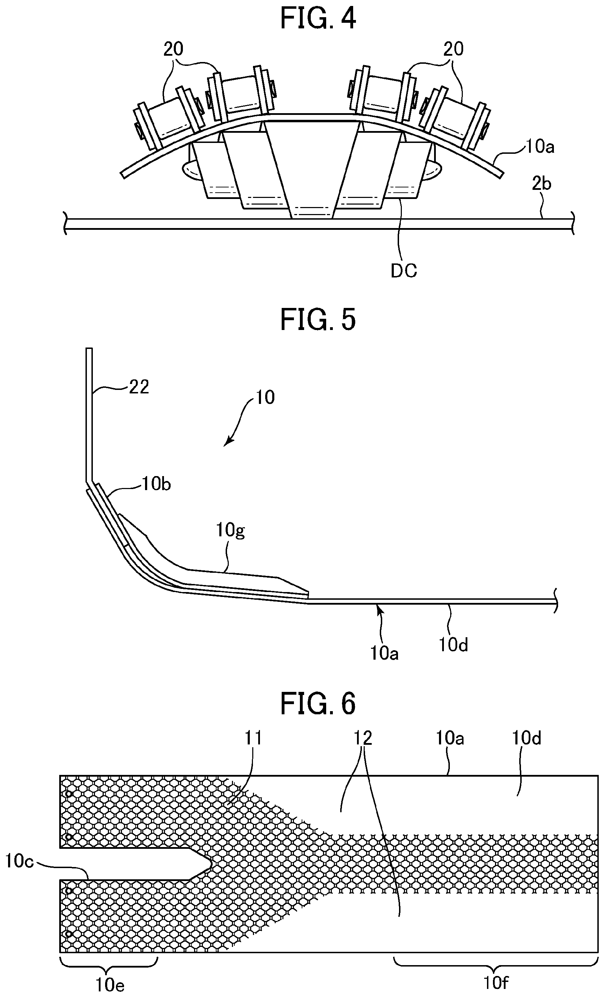

As shown in Fig. 5, the curling sheet unit 10 includes a support part 22 attached to the upstream span 4b, and a sheet which hangs from the support part 22 and extends in the conveying direction A along the conveyor belt 2b. In this embodiment, the sheet is defined by a long sheet 10a and a short sheet 10b.

As shown in Fig. 6, the long sheet 10a is rectangular, and has a width wider than that of the dough piece D and a length enough to curl the dough piece D. The long sheet 10a is preferably flexible in the conveying direction A and in the width direction B to adopt a shape of the dough piece D to be curled. The long sheet 10a is made of, for example, polyester, which is the same material as the conveyor belt 2b.

The long sheet 10a includes an upstream area 10e with a curling start portion for the dough piece D, and a downstream area 10f with a curling completed portion for the dough piece D. Further, the upstream area 10e includes a cutout 10c which extends in the conveying direction and located at the center of the width direction B.

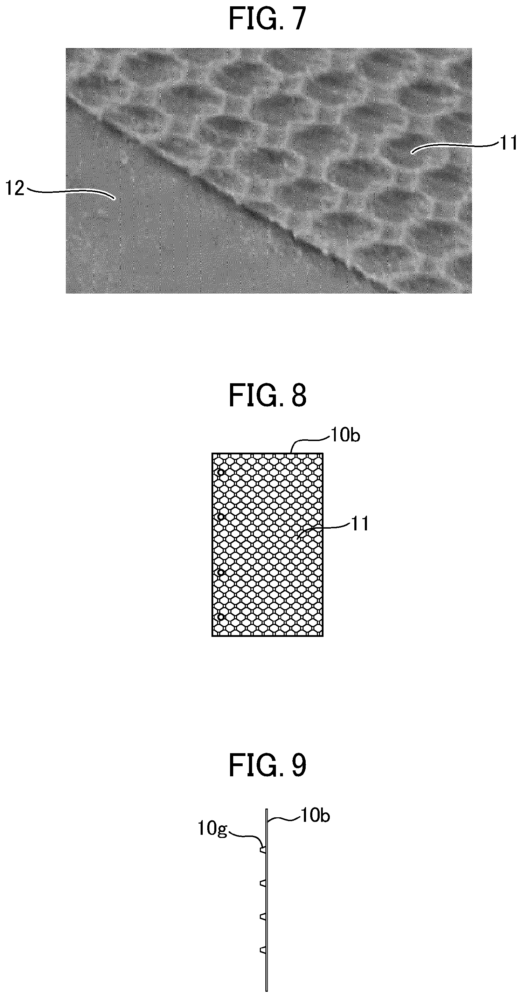

A lower surface 10d of the long sheet 10a includes a first portion 11 which gripping force for the curling operation of the dough piece D is larger, and a second portion 12 which gripping force for the curling operation of the dough piece D is smaller. For example, the first portion 11 includes a convex and concave surface, while the second portion 12 includes a smooth surface (see Fig. 7). An upper surface of the long sheet 10a is an arbitrary surface.

The long sheet 10a is made of, for example, a belt material which is commercially available. This belt material includes convexness and concaveness all over its surface. Specifically, cylindrical protrusions are mainly provided (see Fig. 6). Thus, the second portion 12 is preferably made by removing the protrusions which had been located in the second portion 12. As a result, in the long sheet 10a, a thickness of the second portion 12 is thinner than a thickness of the first portion 11.

On the lower surface 10d of the curling sheet 10a, the upstream area 10e starting the curling operation of the dough piece D is defined by the first portion 11 over the width direction B, while the downstream area 10f completing the curling operation of the dough piece D is defined by the first portion 11 at a center in the width direction B and by the second portion 12 on opposite sides of the center. In an area between the upstream area 10e and the downstream area 10f, the first portion 11 becomes narrow toward the downstream side in the conveying direction A, namely, the second portion 12 becomes broad toward the downstream side in the conveying direction A.

As shown in Figs. 8-10, the short sheet 10b is rectangular, has the same width as the long sheet 10a, and is disposed on the long sheet 10a in the upstream area 10e to form an aperture 10ca between the cutout 10c and the short sheet 10b. For example, the short sheet 10b is made of the same material as the long sheet 10a (such as polyester), and the lower surface thereof includes the same convex and concave surface as the first portion 11. Further, a plurality of rod-like elements 10g extending in the conveying direction is preferably attached to the upper surface of the short sheet 10b. The rod-like elements 10g are made of, for example, polyester. The short sheet 10b and the rod-like elements 10g define a resistance portion for forming a core of the dough piece D.

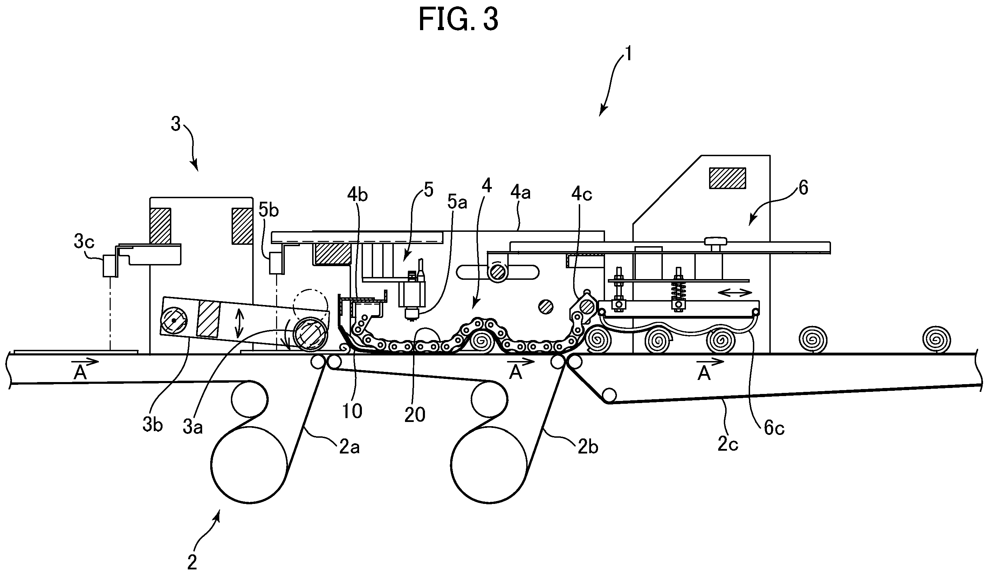

As shown in Figs. 3 and 4, the weight 20 is, for example, a stainless-steel chain, and is disposed on the curling sheet 10a and on opposite sides in the width direction B of the curling sheet 10a.

Next, an operation of the curling device according to the present invention will be explained.

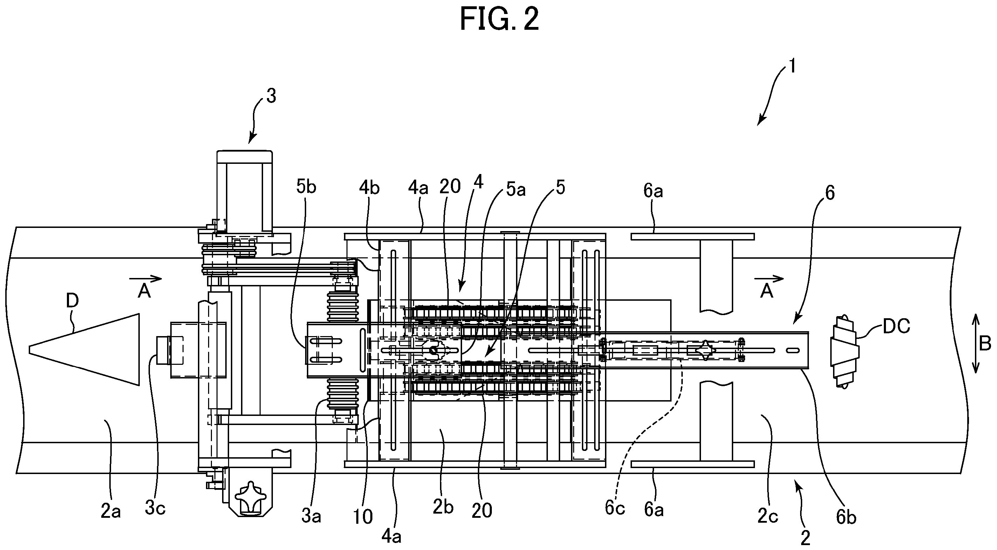

As shown in Fig. 2, a substantially triangular dough piece D with its base aligned in the width direction B is conveyed by the first conveyor belt 2a. The dough piece D is detected by the sensor 3a of the press roller device 3, and when the dough piece D passes the press roller 3a, the press roller 3a is lowered to hold the dough piece D while the dough piece D is being conveyed.

As shown in Fig. 3, a core for the curling is formed by allowing the dough piece D to hit against the curling sheet unit 10, namely, the upstream area 10e of the long sheet 10a so that the curling operation starts. Since the upstream area 10e is defined by the first portion 11 having a gripping force to form a resistance against an upper surface of the dough piece D, forming the core of the dough piece D is enhanced. Further, since the resistance portion (the short sheet 10b and the rod-like element 10g) also add resistance to the upper surface of the dough piece D, forming the core of the dough piece D is further enhanced. The core of the dough piece D is drawn between the second conveyor belt 2b and the curling sheet unit 10 to start rolling. At this moment, it is preferable that the dough piece D between the core thereof and the press roller 3a is stretched. After the dough piece D passes the press roller 3a, the press roller 3a is raised.

Further, a rear end of the dough piece D is detected by the sensor 5b of the spray device 5, and when the rear end of the dough piece D passes the aperture 10ca, water is sprayed through the spray nozzle 5a. This allows the rear end of the dough piece D to be adhered to the dough piece DC being curled. This prevents the rear end of the dough piece D from separating from the adhered location and prevents the curled dough piece DC from coming loose. Since the spray nozzle 5a is disposed downstream of the press roller 3a and the upstream area 10e, water is prevented from adhering to the press roller 3a and the upstream area 10e so that the dough piece D is prevented from adhering to the press roller 3a and the upstream area 10e.

As shown in Fig. 3, a diameter of the dough piece D being curled gradually becomes large. The long sheet 10a of the curling sheet unit 10 adapts a shape of the dough piece D and is curved in the conveying direction A. Further, as shown in Fig. 4, the long sheet 10a contacts the dough piece D at its maximum diameter, and is curved downward toward the opposite sides in the width direction B due to flexibility of the long sheet 10a and the weight 20. This ensures that the dough piece D is curled straightly in the conveying direction A. Namely, the dough piece D is prevented from being curled obliquely, and the shape of the curled dough piece DC is prevented from being fluctuated.

During the latter half of and after the curling operation of the dough piece D, both ends of the core of the dough piece D with small diameters may contact the long sheet 10a. Since the dough piece D is rolling in contact with the long sheet 10a at its maximum diameter, a speed difference is caused between the core of the dough piece D and the long sheet 10a. When the long sheet 10a includes a lower surface with a strong gripping force, the dough piece D rubs against the long sheet 10 and the surface of the dough piece D becomes rough. In the curling device 1 according to the present invention, in the downstream area 10f where the curling operation of the dough piece D has been at least completed (preferably in the downstream area 10f and an area adjacent to the downstream area 10f toward an upstream side), both sides in the width direction contacting the core of the dough piece D in the lower surface 10d of the long sheet 10a are made of the second portions 12 with a small gripping force relative to the dough piece D. Thus, even if the dough piece D contacts the long sheet 10, the surface of the dough piece D can be restricted from becoming rough. Further, since the center of the lower surface 10d of the long sheet 10a in the width direction B is made of the first portion 11, the rolling action of the dough piece D, DC can be surely maintained.

To change the position of the rear end of the dough piece D relative to the curled dough piece DC, for example, to a position contacting the third conveyor belt 2c, the curled dough piece DC is rolled between the third conveyor belt 2c and the press section 6c of the curling position adjustment device 6 by a given distance.

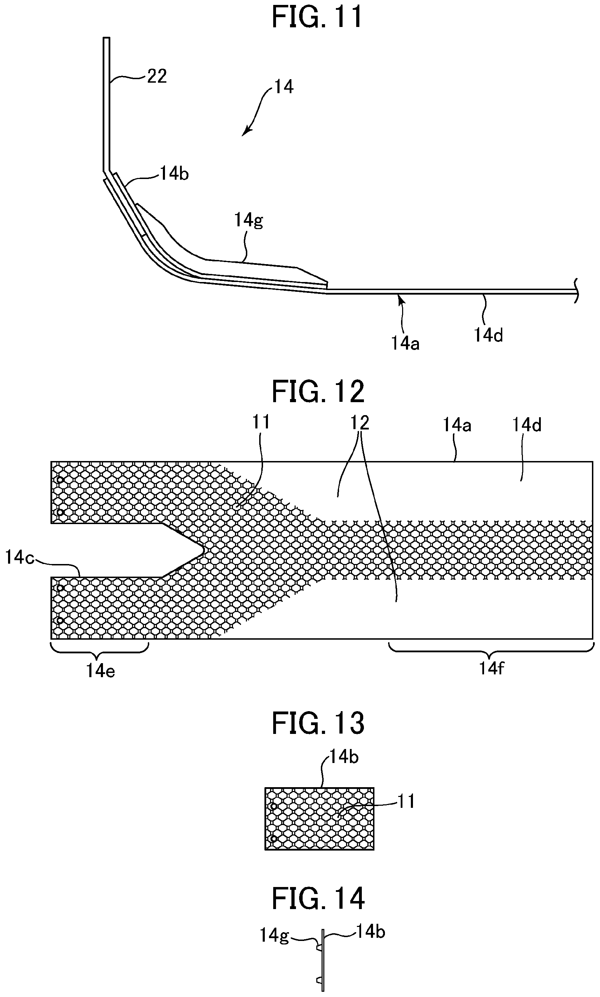

Next, referring to Fig. 11, a first alternative of the curling sheet unit will be explained. The curling sheet unit 14 includes a support part 22 attached to the upstream span 4b, and a sheet which hangs from the support part 22, and extends along the conveyor belt 2b in the conveying direction A, wherein the sheet is defined by a long sheet 14a and two short sheets 14b.

As shown in Fig. 12, the long sheet 14a has almost the same structure as the long sheet 10a of the curling sheet unit 10. Reference numerals for common elements of the long sheet 14a are changed from "10" to "14", and their explanation is omitted.

As shown in Figs. 13-14, the short sheet 14b is rectangular, and has a width which is the same as a distance between an edge of the long sheet 14a and the cutout 14c. In the upstream area 14e, the two short sheets 14b are disposed on the long sheet 14a to prevent from overlapping the cutout 14c. For example, the short sheet 10b is made of the same material as the long sheet 10a, and its lower surface is a convex and concave surface which is the same as that of the first portion 11. Further, a plurality of rod-like elements 14g extending in the conveying direction is preferably attached to the upper surface of the short sheet 14b. The short sheet 14b and the rod-like elements 14g define a resistance portion for forming the core of the dough piece D. Since the curling sheet unit 14 includes the cutout 14c, the curling sheet unit 14 is preferably used when filling is put into the dough piece D.

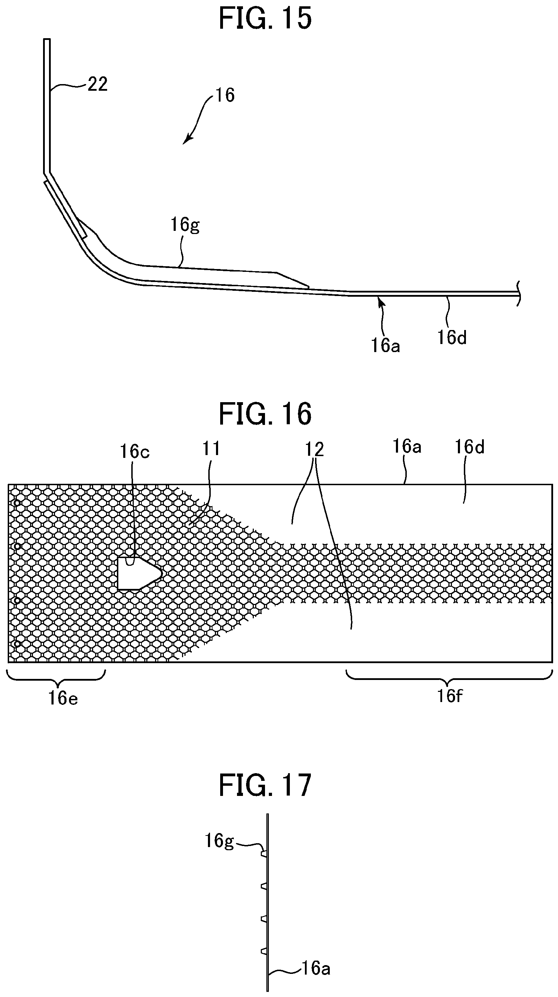

Next, referring to Fig. 15, a second alternative of the curling seat unit will be explained. The curling sheet unit 16 includes the support part 22 attached to the upstream span 4b, and a sheet which hangs from the support part 22 and extends in the conveying direction A along the conveyor belt 2b, wherein the sheet is defined by a long sheet 16a.

As shown in Fig. 16, the long sheet 16a has almost the same structure as the long sheet 10a of the curling sheet unit 10. Reference numerals for common elements of the long sheet 16a are changed from "10" to "16", and their explanation is omitted.

As shown in Fig. 16, in the upstream area 16e and at the center in the width direction B, the long sheet 16a includes an aperture 16c through which the sprayed water passes. Further, a plurality of rod-like elements 16g extending in the conveying direction is preferably attached to an upper surface of the long sheet 16b. The rod-like elements 16g define a resistance portion for forming the core of the dough piece D.

Even if the alternative curling sheet units 14, 16 are used, the curling operation of the curling device 1 according to the present invention is the same as that when the curling sheet unit 10 is used.

Although the embodiments of the curling device according to the present invention have been explained, the scope of the present invention is not limited to the embodiments. Namely, various modifications are possible within the scope of the claims, and are also included within the scope of the present invention.

In the above embodiments, the first portion 11 defines the convex and concave surface and the second portion 12 defines a smooth surface, but the first and second surfaces are not limited to that. The shapes of the first portion 11 and the second portion 12 are arbitrary as long as they have different gripping forces relative to the dough piece D. For example, the convex and concave shape of the first portion 11 is arbitrary, and for example, the first portion 11 may define multiple apertures on a smooth surface. In another example, even if the first portion 11 may define a surface with a relatively large frictional force relative to the dough piece D, and the second portion 12 may define a surface with a relatively small frictional force relative to the dough piece D. In another example, the surface may be defined by a combination of two sheets with different surface slipperiness or a combination of a metallic chain and a urethane belt. Further, the long sheets 10a, 14a, 16a may be made by pasting a sheet for the first portion 11 and a sheet for the second portion 12 together, which are made separately.

In the above embodiments, the lower surface 10d, 14d, 16d of the long sheet 10a, 14a, 16a are defined by two portions 11, 12, but for example, a third portion with an intermediate gripping force between the first portion 11 and the second portion 12 may be added between the first portion 11 and the second portion 12.

In the above embodiments, the shape of the dough piece D is substantially triangular, but the shape is not limited thereto. The shape of the dough piece D is, for example, a shape that the core for a curling operation protrudes toward both sides in the width direction B in the curled dough piece DC. In this case, briefly the width of the dough piece D becomes narrow toward the rear end (the upstream side).

In the above embodiments, the speeds of the first to third conveyor belts 2a, 2b, 2c are different, but these speeds may be the same as each other if the dough piece D can be curled. Further, the lower conveyor 2 may be configured by one conveyor belt.

The press roller device 3, the spray device 5, and the curling position adjustment device 6 may be omitted, if they are not necessary for curling the dough piece D.

1: curling device
2b: second conveyor belt
4: curling unit
10, 14, 16: curling sheet unit
10a, 14a, 16a: long sheet
10b, 14b: short sheet (resistance portion)
10c, 14c: cutout
10d, 14d, 16d: lower surface
10e, 14e, 16e: upstream area
10f, 14f, 16f: downstream area
10g, 14g, 16g: rod-like element (resistance portion)
11: first portion
12: second portion
16c: aperture
20: weight
A: conveying direction
B: width direction
D: dough piece
DC: curled dough piece

## Claims

1. A curling device (1) for curling a flat dough piece (D), comprising:
a lower conveyor (2) including a conveyor belt (2b) for conveying the dough piece (D); and
a curling sheet unit (10, 14, 16) disposed on the conveyor belt (2b);
wherein the curling sheet unit (10, 14, 16) includes a curling sheet (10a, 14a, 16a) for curling the dough piece (D),
wherein the curling sheet (10a, 14a, 16a) includes a lower surface (10d, 14d, 16d) facing the conveyor belt (2b), and the lower surface (10d, 14d, 16d) includes a first portion (11) having a relatively large gripping force relative to the dough piece (D) and a second portion (12) having a relatively small gripping force relative to the dough piece (D), and
wherein the lower surface (10d, 14d, 16d) of the curling sheet (10a, 14a, 16a) is made of the first portion (11) in an upstream area (10e, 14e, 16e) where the curling operation of the dough piece (D) starts, and the central portion in the width direction is made of the first portion and the both sides in the width direction is made of the second portion in the downstream area (10f, 14f, 16f) where the curling operation of the dough piece (D) has been completed.

2. The curling device according to claim 1, wherein the first portion (11) includes a convex and concaveness surface, while the second portion (12) includes a smooth surface.

3. The curling device (1) according to claim 1, wherein the curling sheet unit (10, 14, 16) includes a resistance portion that enhances the curling operation of the dough piece (D) in the upstream area (10e, 14e, 16e).

4. The curling device (1) according to claim 3, wherein the resistance portion includes a sheet (10b, 14b) which is different from the curling sheet (10a, 14a).

5. The curling device (1) according to claim 3, wherein the resistance portion includes a rod-like element (16g) integrated with the curling sheet (16a).

6. The curling device (1) according to claim 1, wherein the curling sheet (10a, 14a, 16a) includes a cutout or an aperture (10c, 14c, 16c) through which a spray passes.

7. The curling device (1) according to claim 1, further comprising a weight (20) disposed on the curling sheet (10a, 14a, 16a) and both sides of the curling sheet (10a, 14a, 16a) in the width direction (B).
